# EUROPÄISCHE PATENTANMELDUNG

(11) **EP 0 889 166 A2**
(43) Veröffentlichungstag der Anmeldung: **07.01.1999**
(21) Anmeldenummer: 98110871.5
(22) Anmeldetag: 15.06.1998
(51) Int. Cl.: D21F 7/08

(54) **Papiermaschinenfilz mit stark zweiseitiger Struktur**

(30) Priorität: 30.06.1997 DE 29711279 U; 30.06.1997 DE 19727521; 05.05.1998 DE 19819641
(71) Anmelder: Schiel, Christian, 82418 Murnau (DE)
(72) Erfinder: Schiel, Christian, 82418 Murnau (DE)
(74) Vertreter: Dr. Weitzel & Partner

(57) **Zusammenfassung**

Ein Filz und ein Verfahren zu seiner Herstellung werden beschrieben. Die Eigenschaft dieses neuartigen Filzes ist eine gleichmäßige Papierunterstützung, gepaart mit gutem Wasserspeicher- und Wasserabgabevermögen. Diese Eigenschaften werden dadurch erzielt, daß man auf eine mit Durchbrüchen und Hohlräumen durchsetzte Trägerschicht ein feines Faservlies aufnadelt und nachträglich die freie Oberfläche der in den Hohlräumen steckenden Vliesfasern in einem weiteren Verfahrensschritt verkleinert.

## Beschreibung

Die Erfindung betrifft einen Papiermaschinenfilz zur Unterstützung und Entwässerung von laufenden Papierbahnen in einer Papiermaschine sowie ein Verfahren zur Herstellung eines Papiermaschinenfilzes. Solche Filze bestehen aus einer (unteren) Trägerschicht und einer darüberliegenden Vliesschicht.

Die Funktion der Trägerschicht ist es, dem Filz Zugfestigkeit und Dimensionsstabilität in Längs- und Querrichtung zu verleihen. Die Funktion der Vliesschicht besteht in einer möglichst gleichmäßigen Unterstützung der Papierbahn. Darüber hinaus müssen beide Schichten auch unter Druck noch wasserdurchlässig sein, und die Trägerschicht soll in ihren Hohlräumen und Durchbrüchen auch unter Druck noch Wasser speichern können. Solche Filze können aus Wolle, Kunststoff, Kunststoff-Faser oder aus einem Gemisch dieser Komponenten hergestellt werden.

Bei den heute gebräuchlichen Filzen besteht die Trägerschicht meist aus einer oder aus mehreren Lagen eines Kunststoffgewebes, auf die eine oder mehrere Lagen von Wirrvliesen aufgenadelt sind. Beim Nadeln entsteht zwischen Vlies und Trägerschicht dadurch eine mechanische Verbindung, daß kantige Nadeln mit kleinen Mitnehmerhäkchen an den Kanten bei ihrer Abwärtsbewegung Fasern aus dem Vlies mitziehen und senkrecht in und durch die Trägerschicht hinein- und hindurchstopfen. Nach dem Herausziehen der Nadeln bleiben die mitgenommenen Vliesfasern durch Reibungsschluß in der Trägerschicht stecken.

Diese Filze sind für eine ganze Reihe von Anwendungen geeignet, aber bei anderen Anwendungen tun sich Engpässe bei der Wasserentfernung auf. Insbesondere wird die Wasserentfernung durch Luftspülung mittels Saugschlitzen und Saugwalzen mit steigender Maschinengeschwindigkeit immer unvollkommener, weil die Einwirkzeit des Luftstroms immer kürzer wird.

Um diesen Mangel zu kompensieren, werden die Vliesschichten der Filze offener und gröber gemacht, was die Gleichmäßigkeit der Unterstützung der Papierbahn verschlechtert und z.B. in Naßpressen von Papiermaschinen die Papierqualität schädigende Markierungen in der Papieroberfläche erzeugt. Auch sinkt der Trockengehalt der Papierbahn nach der Naßpresse wegen verstärkter Wasserrückwanderung aus dem Filz zurück in die Papierbahn am Ende der Preßzone. Außerdem halten die in die Durchbrüche und Hohlräume der Trägerschicht hineingestopften Vliesfasern dort das Wasser wie Pinsel infolge ihrer großen freien Oberfläche fest. Es können sich zwischen diesen Fasern auch Schmutzstoffe leichter festsetzen, die zur Reduzierung des Wasserspeichervermögens in den Hohlräumen beitragen. Das Netto-Wasserspeichervermögen des Filzes, definiert als maximal aufnehmbare Wassermenge minus der nach einem Wasserentfernungsschritt im Filz übrigbleibende Restwassermenge, wird ganz erheblich von der Menge und Länge der in die Hohlräume hineingestopften Vliesfasern beeinflußt, die für die Erzeugung einer genügend festen Verbindung zwischen Vlies und Trägerschicht notwendig ist.

Diese Zusammenhänge sind schon länger bekannt und im Fachartikel "Neue Entwicklungen in der Konstruktion und Verwendung von Papiermaschinen-Filztüchern (I)" von Edward Race in APR (Allgemeine Papier-Rundschau) Nr. 37/38, 1970, Seiten 1378 bis 1388 wird ein Produkt beschrieben, das die angestrebten Vorzüge haben soll, s. Seite 1386, mittlere Spalte, letzter Absatz und Seite 1388, erste Spalte sowie Bild 6.

Trotz einer besonderen Nadeltechnik ist das Speichervolumen klein und der Filz muß so durchlässig sein, daß er mittels Luftdurchspülung über Saugschlitzen von Rohrsaugern entwässert werden kann. Diese Filzkonstruktion hat sich jedoch nicht durchgesetzt, vermutlich wegen Fertigungsproblemen. An ihre Stelle traten offene Filzstrukturen mit beidseitiger Vliesauflage, die bis auf den heutigen Tag dominieren.

Es ist das Ziel der Erfindung, einen Filz der oben beschriebenen Art so zu verbessern, daß sein Netto-Wasserspeichervermögen erhöht, eine Wasserabgabe nach unten, d.h. zur Innenseite der endlosen Filzschlaufe hin erleichtert und die Papierunterstützung durch das Vlies verbessert wird. Insbesondere soll die Wasserabgabe nach unten so stark verbessert werden, daß eine Luftspülung durch den Filz hindurch zur Erzielung einer genügend großen Nettoentwässerung nicht mehr notwendig ist.

Außerdem soll das die Papierbahn stützende Vlies so dicht und feinporig gestaltet sein, daß eine Rückbefeuchtung des Papiers vom Filz her am Ende einer Naßpreßzone gar nicht mehr oder nur noch in stark reduziertem Umfang erfolgen kann, oder so dicht sein, daß es sich bei Anlegen auch größerer Druckdifferenzen zwischen den beiden Filzseiten nicht entwässern läßt.

Diese Ziele werden mit Hilfe der in den Ansprüchen definierten Erfindungsgedanken erreicht:

Nach einem ersten Gedanken ist darum vorgesehen, nach dem Aufnadeln des Vlieses auf die Trägerschicht die freie Oberfläche der Vliesfasern in den Hohlräumen der Trägerschicht zu verkleinern.

Diese Verkleinerung soll in einer Weise erfolgen, durch die nicht nur das Wasserabgabevermögen aus den Hohlräumen der Trägerschicht verbessert wird, sondern auch die Haftung zwischen Trägerschicht und Vlies. Auf diese Weise gelingt es, mit weniger in die Hohlräume hineingestopften Vliesfasern eine genügende Haftung zwischen Vlies und Trägerschicht zu erzielen. Das Wasserspeichervolumen der Hohlräume wird vergrößert.

Dieser Effekt wird nach einem weiteren Gedanken durch Verkleben der Vliesfasern untereinander oder mit der Wandung der Hohlräume in der Trägerschicht erreicht.

In einer anderen Ausgestaltung werden die in die Trägerschicht hineinragenden Vliesfasern von ihren unteren Enden her in der Länge geschrumpft, wodurch sich die Endbereiche unter Abnahme der spezifischen Oberfläche verdicken. Die verdickten Endbereiche erschweren, ähnlich wie Nietköpfe, das Herausziehen der Vliesfasern aus der Trägerschicht.

Sind durch die beschriebenen Maßnahmen Wasserspeicher- und Wasserabgabevermögen der Hohlräume der Trägerschicht verbessert worden, kann man auf Luftspülung durch den Filz hindurch als Mittel der Entwässerung verzichten, und das Faservlies kann viel feiner und dichter gemacht werden mit einem Querschnitt der Vliesfasern zwischen 2 x 10⁻⁵ bis 3 x 10⁻⁴ mm². Mit diesen feinen Fasern kann man im Vergleich zu herkömmlichen Fasern die Papierbahn gleichmäßiger unterstützen, so daß die Papierbahn nicht in den Filz hinein gedrückt wird. Dabei kann das Vlies aus mehreren Schichten unterschiedlich feiner Fasern bestehen.

Struktur und Dicke der Vliesschicht richten sich vorwiegend nach der Gleichförmigkeit der Unterstützung durch die Trägerschicht. Je dünner sie ist, desto geringer ist ihr Strömungswiderstand, und je dicker sie ist, desto größer ist ihr Vermögen, Ungleichmäßigkeiten der Trägerschichtstruktur auszugleichen. Hat die Trägerschichtoberseite eine sehr feine Topographie, genügen etwa 200 g/m² Vliesfasern, ist sie gröber, bedarf es einer größeren Masse von Vliesfasern.

Legt man ein loses Vlies auf die Trägerschicht, dann bedarf es zu vieler Nadeleinstiche zur Erzielung einer genügenden Verdichtung, und die Hohlräume in der Trägerschicht werden durch zu viele Vliesfasern unnötig verstopft. Um dies zu vermeiden, werden mindestens Teilschichten des Faservlieses vor dem Aufnadeln auf die Trägerschicht vorkomprimiert.

Es kann besonders vorteilhaft sein, eine vorkomprimierte Zwischenschicht zwischen Trägerschicht und oberer Vliesschicht einzulegen. Diese Zwischenschicht kann dann z.B. aus einem Material geringerer Festigkeit bestehen. Die aus der oberen Vliesschicht hindurchgenadelten Fasern sorgen dann für die gute Haftung auf der Trägerschicht.

Auf diese Art kann als Zwischenschicht auch eine Folie in den Filzverbund eingenadelt werden. Infolge der Nadelstiche wird diese wasserdurchlässig.

Die Trägerschicht kann aus einem einlagigen oder mehrlagigen Kunststoffsieb bestehen, wobei bei letzterem die Struktur nach oben hin feiner wird, oder auch aus einem groben unteren (inneren) Sieb und einem darüberliegenden feinen (äußeren) Sieb.

Statt einem Gewebe kann als Trägerschicht auch eine gelochte Folie dienen, die z.B. auf der Unterseite nach unten offene Hohlräume enthält.

Zur Verstärkung kann die Trägerschicht in Längs- und Querrichtung verlaufende Verstärkungsfäden enthalten. Dadurch wird insbesondere bei einer Trägerschicht aus Folie Rißunempfindlichkeit erreicht.

Die flächenbezogene Masse der Trägerschicht sollte nicht größer als notwendig sein, damit der Filz beim Einbau leicht handhabbar ist. Andererseits gibt es Einsatzfälle, bei denen durch großen Wasseranfall genügend große Hohlräume erforderlich sind. In diesen Fällen muß die Trägerschicht dann dicker und damit schwerer gemacht werden. Bei den hauptsächlichen Anwendungen liegt die flächenbezogene Masse der Trägerschicht im Bereich von 500 bis 2000 g/m².

Es ist zwar bekannt, durch Nachbehandlung, z.B. mit Wärme, fertig genadelte Filze zu kompaktieren, aber bei diesen pauschalen Methoden erreicht man nicht den erstrebten Effekt einer Erhöhung des Netto-Speichervermögens des Filzes, und bei Benutzung eines Kalanders werden dann auch die Hohlräume meist noch bleibend verkleinert. Aus diesem Grunde ist vorgesehen, das Umformen ausschließlich durch Einwirkung von unten d.h. von der Seite der Trägerschicht her auf die in den Hohlräumen der Trägerschicht vorhandenen Vliesfasern zu konzentrieren, und zwar wieder so, daß deren freie Oberfläche durch die Behandlung kleiner wird.

Eine Verfahrensvariante hierzu besteht aus Einblasen oder Einsprühen eines Behandlungsfluids, wie Ameisensäure, von unten in die Hohlräume der Trägerschicht. Auf diese Art kann die vorgereckte Faser durch Erweichung in ihrer Länge schrumpfen und wird gleichzeitig an ihrer Oberfläche klebrig gemacht und kann dadurch an einer Oberfläche in der Trägerschicht festkleben.

Ein anderer Weg zur Längenschrumpfung und Verdickung der Faserenden in den Hohlräumen besteht in thermischer Erweichung bis hin zur Schmelzung der in die Hohlräume hineinragenden Fasern.

Es ist vorgesehen, den Filz langsam über eine Heißluftdüse hinwegzubewegen, die Heißluft in die Hohlräume hineinbläst und damit die thermische Umformung der Faserenden bewirkt.

In einer anderen Ausgestaltung erfolgt die Erhitzung der Faserenden durch elektromagnetische Wellen in einem geeigneten Spektralbereich zwischen UV-Licht und Radiowellen.

Beim thermischen Umformen der Faserenden sollen diese möglichst stark und die Trägerschicht möglichst wenig erhitzt werden. Dies wird dadurch erreicht, daß die Vliesfasern opak gemacht werden, bzw. die Wellenlänge der elektromagnetischen Strahlung in einen Bereich gelegt wird, in dem das Fasermaterial opak ist.

Andererseits kann es auch vorteilhaft sein, die beaufschlagten Oberflächen der Trägerschicht so zu präparieren, daß sie einer schnellen Aufheizung widerstehen, z.B. durch eine reflektierende Schicht oder Transparenz.

Nach einer weiteren Variante des Herstellverfahrens wird die Verkleinerung der freien Oberfläche der in die Hohlräume der Trägerschicht hineingenadelten Vliesfasern in drei Schritten durchgeführt, um das Grundgewebe so weit wie möglich vor unerwünschter thermischer Beeinflussung zu schützen, jedoch die Faseroberfläche in den Hohlräumen maximal zu reduzieren.

Im ersten Schritt werden Vliesfasern, die auf der Unterseite aus der Trägerbahn herausragen, abgetrennt oder abgesengt.

Im zweiten Schritt werden die am meisten exponierten Teile der Trägerbahn, z.B. die Unterseiten der Fäden, die einer Wärmeeinwirkung von unten am unmittelbarsten ausgesetzt sind, mit einem Schutzanstrich versehen.

Im dritten Schritt wird nun mit Wärme in die Hohlräume der Trägerschicht hineingewirkt und egal, ob es sich um Heißluft oder Strahlungswärme handelt, bewirkt der Schutzanstrich eine Minderung der Erhitzung der am meisten exponierten Partien der Trägerschicht.

Der Schutzanstrich ist bevorzugt reflektierend und/oder isolierend und genügend hitzebeständig für die kurze Einwirkzeit der Wärme. Er kann leicht entfernbar, z.B. mit Wasser auswaschbar, sein.

Die thermische Einwirkung, besonders bei elektromagnetischer Strahlung, kann desweiteren in ihrer Wirkung verstärkt werden, indem man ihr Richtungskomponenten verleiht, die anstatt senkrecht, schräg unter einem Neigungswinkel zur Senkrechten auf die Unterseite der Trägerschicht wirken. Dadurch werden in einer gewobenen Trägerschicht auch noch tiefere Zonen in den Hohlräumen der Trägerschicht erreicht, die bei senkrechter Bestrahlung wegen davorliegender Fäden von der Strahlung abgeschirmt wären. So eine räumliche Strahlung kann beispielsweise mittels von einem Laser kommender und durch eine kurzbrennweitige Linse konzentrierte Strahlung erreicht werden, aber auch durch andere Strahler mit entsprechenden Sammelspiegeln und Sammellinsen.

Bei genügend hoher Energiedichte gelingt es auch, Teile der Fasern in den Hohlräumen zu verbrennen oder zu verdampfen, wodurch das freie Porenvolumen in den Hohlräumen in erwünschter Weise vergrößert wird.

Auch bei Heißluftapplikation kann deren Tiefenwirkung auf die Vliesfasern in den Hohlräumen der Trägerschicht gesteigert werden und zwar dadurch, daß von der Oberseite des Filzes her im Bereich der Heißluftzufuhr Luft durch das Vlies hindurch abgesaugt wird. Die Luft, die in die Hohlräume eingeblasen wird und dort durch Abgabe von Wärme an die Fasern abgekühlt wird, müßte sonst wieder entgegen dem Heißluftstrom entweichen und würde diesen durch Vermischung abkühlen. Wird die abgekühlte Luft jedoch in das Vlies weitergesaugt, geschieht diese Abkühlung nicht oder nur in geringerem Maße.

Um bei stark gekürzten Fasern in den Hohlräumen immer noch eine gute Haftung zwischen Trägerschicht und Vlies entstehen zu lassen, ist vorgesehen, den obersten Schußfaden eines als Trägerschicht dienenden Grundgewebes aus Spinngarn herzustellen und die übrigen Fäden in Schuß und Kette des 3- bis 4-lagigen Gewebes (3 bis 4 Lagen von Schußfäden) aus Monofilen oder aus 2 bis 8 Monofilfäden gezwirnten Strängen. Aus nur einem Monofil bestehende Stränge haben den Vorteil eines größeren Speichervolumens für ausgepreßtes Wasser in der Trägerschicht, die gezwirnten Stränge haben dagegen Vorteile beim Nadeln.

Bei vielen Druckpapiersorten ist eine unterschiedliche Oberflächenrauhigkeit auf den beiden Papierseiten unerwünscht. Preßt man nun in einer doppelt befilzten Presse eine Papierbahn zwischen einem Filz der beschriebenen Bauart und einem konventionellen Filz, der z.B. als Vakuumabnahmefilz oder dergleichen genügend luftdurchlässig sein muß und konsequenterweise aus groberen Fasern mit größerer Dicke besteht, dann ergibt sich zwangsweise auf der diesem Filz zugewandten Seite eine rauhere Oberfläche.

Um diesen Effekt zu vermeiden und trotzdem eine Wiederbefeuchtung der Papierbahn vom Filz der beschriebenen Bauart zu verhindern, ist vorgesehen, diesen an seiner Oberfläche mit einer dünnen Schicht gröberer Fasern zu versehen, so daß sich diese bei der Pressung ähnlich stark wie jene des anderen Filzes in das Papier einprägen, jedoch eine höhere Wiederbefeuchtung infolge des darunterliegenden dichten und feineren Vlieses minimiert wird. Da es sich nur um einen Oberflächeneffekt im Papier handelt, kann die Schicht der groben Fasern aus einem sehr dünnen Flor von nur ca. 20 bis 100 g/m² bestehen.

Weil beim Nadeln bevorzugt die oberen Schichten des Vlieses von den Nadeln erfaßt und in die Trägerschicht gezogen werden, kann in dieser Ausgestaltung mit weniger freier Oberfläche in den Hohlräumen die erforderliche Haftung zwischen Trägerschicht und Vlies erreicht werden, ausgehend von der Tatsache, daß das Verhältnis des die Zugfestigkeit der Faser bestimmenden Querschnittes zu deren Oberfläche mit steigender Dicke der Faser günstiger wird (Querschnitt wächst mit d² und Oberfläche nur proportional mit d).

Schließlich kann auch das Material der Trägerschicht einen höheren Schmelzpunkt haben als jenen der Vliesfasern.

Ein Grundgedanke der Erfindung besteht darin, das Verengen oder Verlegen der Öffnungen und Hohlräume der Trägerschicht, hervorgerufen durch die eingenadelten Vliesfasern, wenigstens teilweise wieder rückgängig zu machen.

Die Erfindung ist anhand der Figuren 1 bis 7 näher erläutert.

Es bedeuten:
- Fig. 1:: ein Schnitt durch einen erfindungsgemäßen Filz;
- Fig. 2:: ein Filz während der Behandlung;
- Fig. 3:: ein Filz bei thermischer Behandlung;
- Fig. 4:: ein Filz mit Zwischenschicht;
- Fig. 5:: ein Filz mit einstückiger Trägerschicht;
- Fig. 6:: Verfahrensstufen bei der Filzherstellung;
- Fig. 7:: elektromagnetische Filzbehandlung;
- Fig. 8:: Schnitt durch einen Mehrlagenfilz;
- Fig. 9:: Schnitt durch einen Filz mit Isolieranstrich.

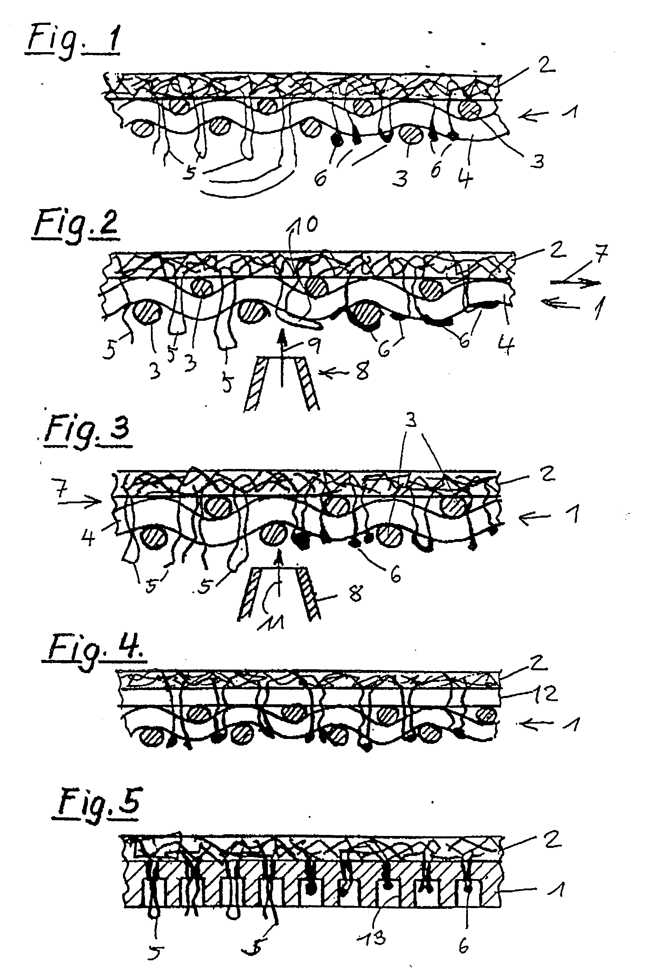

In Figur 1 befindet sich auf einer Trägerschicht 1 eine Vliesschicht 2. Die Trägerschicht 1 ist ein aus Längsfäden 3 und Querfäden 4 gebildetes Gewebeband. In der linken Bildhälfte sind einige Vliesfäden 5 durch die Trägerschicht 1 hindurchgenadelt. In der rechten Bildhälfte sind solche Vliesfäden unter Verdickung der Enden durch Längsschrumpfung umgeformt.

In Figur 2 ist wieder ein Schnitt durch einen Filz mit Trägerschicht 1 und Vliesschicht 2 zu sehen. Der Filz wird in Richtung 7 über eine Behandlungsdüse 8 hinwegbewegt. Ein Behandlungsfluid 9 wird von unten in die Trägerschicht 1 hineingebracht. In der linken Bildhälfte sind noch unbehandelte Faserenden bzw. Endschlaufen 5 zu sehen. In der rechten Bildhälfte sind die Faserenden 6 infolge Erweichung geschrumpft, verdickt und an die Trägerschicht 1 angeklebt. Die mittlere Faserschlaufe 10 ist gerade im Erweichen und Schrumpfen begriffen.

In Figur 3 ist wieder ein Querschnittselement eines Filzes zu sehen mit einer Trägerschicht 1 und einer Vliesschicht 2, das in Pfeilrichtung 7 über eine Behandlungsdüse 8 hinwegbewegt wird. Die links im Bild noch ungeschrumpften Faserenden 5 schmelzen im Heißluftstrom 11 und bilden Verdickungen 6 an den Enden.

Figur 4 zeigt eine andere Konstruktion, bei der zwischen Trägerschicht 1 und Vliesschicht 2 noch eine Zwischenschicht 12 eingebaut ist. Diese Zwischenschicht 12 kann aus Fasermaterial oder Folie bestehen.

Figur 5 zeigt einen Filz, der aus einer Trägerschicht 1 mit in seine Unterseite hineingearbeiteten Hohlräumen 13 besteht, in die Vliesfasern 5 hineingestopft sind (links), die durch eine Nachbehandlung von der Unterseite her verkürzt und an den Enden verdickt wurden (rechts).

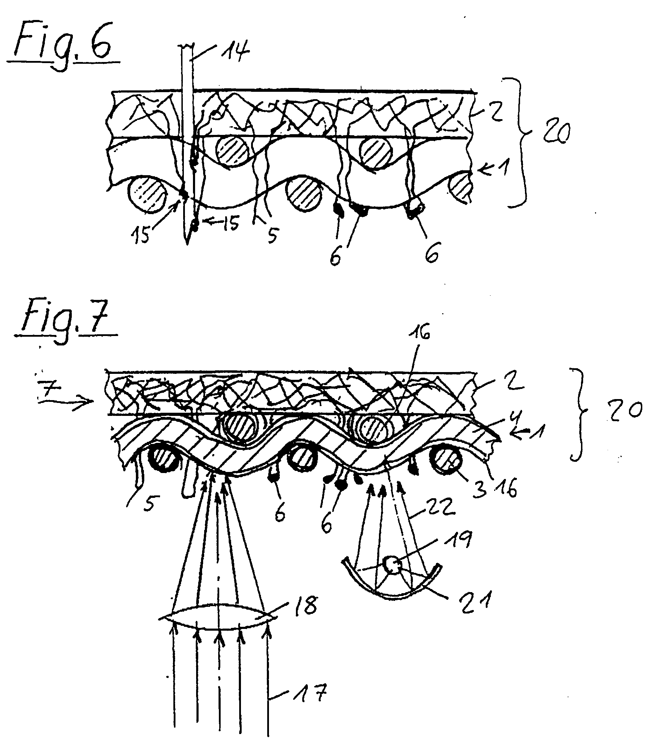

Figur 6 zeigt den Werdegang der Filzstruktur, und zwar von links nach rechts werden mit den Häkchen 15 einer abwärtsbewegten Nadel 14 Vliesfasern 5 in die Trägerschicht 1 hineingestopft und anschließend an ihren Enden in die Form 6 gebracht.

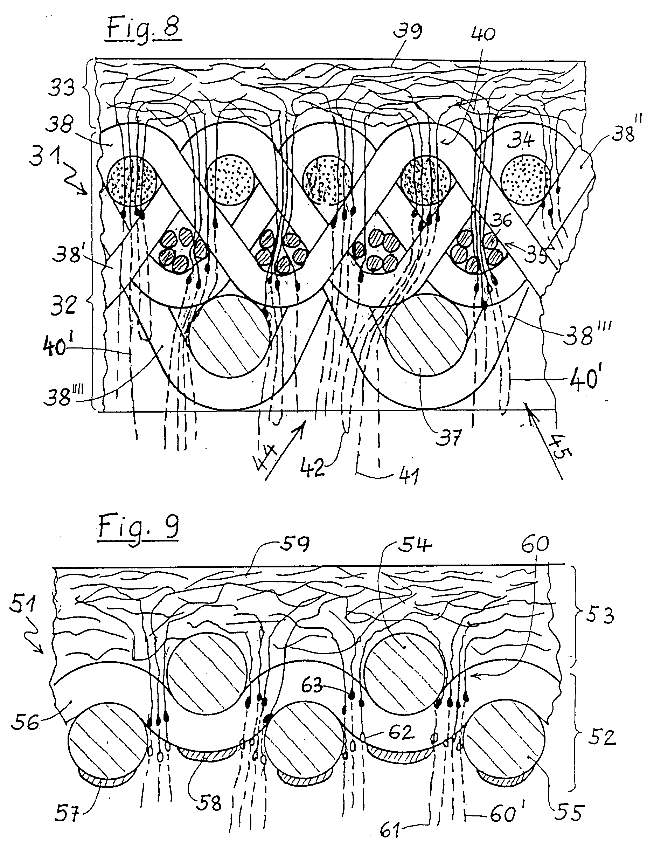

Figur 7 zeigt wieder einen Filz 20 im Schnitt, bestehend aus einem Trägerband 1 und einer Vliesschicht 2. Die Fäden 3 und 4 der Trägerschicht 1 sind durch eine Wärmeschutzschicht 16 vor der elektromagnetischen Strahlung 17 und 22 geschützt, die von einer Linse 18 oder einem Spiegel 21, der von einer Lichtquelle 19 bestrahlt wird, verdichtet auf die Unterseite der Trägerschicht gelangt und die Enden 5 der in die Trägerschicht hingestopften Vliesfasern zu Klümpchen 6 zusammenschmelzen läßt, wenn der Filz in Pfeilrichtung 7 über die Strahler 18 und/oder 21 bewegt wird.

In der beschriebenen Form modifiziert, ist der Papiermaschinenfilz geeignet, in den Öffnungen der Trägerschicht gespeichertes Wasser aus diesen abzugeben, beispielsweise durch Luftspülung in oder gegen die Laufrichtung, wobei sowohl Luftseintrömung als auch Wasserausströmung an der Unterseite der Trägerschicht erfolgen oder durch Abschleuderung im Fliehkraftfeld eines konvex gekrümmten Abschnitts der Unterseite der Filzbahn.

In Fig. 8 ist 31 ein Querschnittselement eines Filzes mit dreilagigem Grundgewebe 32, auf das eine Vliesschicht 33 aufgenadelt ist, dargestellt. Das als Trägerschicht dienende Grundgewebe 32 besteht seinerseits aüs einer oberen Reihe von Schußfäden 34, die aus Spinngarn aufgebaut sind, einer mittleren Reihe von Schußfäden 35, die aus je fünf Monofilfäden 36 zusammengezwirnt sind und einer unteren Lage von Schußfäden 37, die als steife, monofile Drähte ausgebildet sind.

Die Schußfäden werden durch in Richtung senkrecht zur Zeichenebene hintereinanderliegende monofile Kettfäden 38, 38', 38'', 38''' und 38'''' zusammengehalten und bilden mit diesen gemeinsam die Trägerschicht 32. Die Reihenfolge der verschieden verlaufenden Kettfäden wiederholt sich in einem gleichbleibenden Muster über die ganze Filzfläche. Während die Kettfäden 38 bis 38'' nur die beiden oberen Schußfädenreihen einbinden, verbinden die Kettfäden 38''' und 38'''' auch die unteren, dicken Monofilfäden 37 mit dem Rest der Trägerschicht.

Die Vliesschicht 33 besteht aus einem Gewirr von im wesentlichen in der Filzebene verlaufenden Fasern 39, von denen aber einzelne Stränge 40 beim Nadeln nach unten in die Trägerschicht 32 ein- und teilweise durch diese hindurchgezogen werden. Die Enden der Fasern 40' dieser Stränge haben nach dem Nadeln Enden 41 oder Endschlaufen 42.

Der gestrichelt gezeigte Teil der Fasern 40' wird bei der nachfolgenden Umformoperation verbrannt, verdampft oder zu einer Verdickung 43 zusammengeschmolzen, so daß nach dieser Behandlung nur noch die ausgezogenen Teile der Fasern 40' übrig sind und die unerwünschten gestrichelt, gezeigten Faserabschnitte zwischen den Enden 41, 42 und den Verdickungen 43 verschwunden sind.

Wenn die Verkürzung der gestrichelten Abschnitte der Fasern 40' durch Strahlungswärme erfolgen soll, ist es sehr vorteilhaft, einen großen Teil dieser Strahlung statt senkrecht, wie mit den Pfeilen 44 und 45 angedeutet, geneigt einzubringen, um so auch noch höher gelegene Faserteile in den Hohlräumen der Trägerschicht zu erreichen.

In Fig. 9 ist ein Querschnittselement 51 eines Filzes gezeigt, das aus einer gewobenen Trägerschicht 52 und einer daraufliegenden Vliesschicht 53 besteht. Die Trägerschicht 52 besteht aus senkrecht zur Zeichenebene verlaufenden Fäden 54 und 55 und parallel zur Zeichenebene liegenden Fäden 56. Die Vliesschicht 53 besteht aus im wesentlichen parallel zur Filzebene verlaufenden Fasern 59, die in Strängen 60 beim Nadeln senkrecht nach unten in die Trägerschicht 52 und durch diese hindurch gestopft sind. Die Stränge 60 bestehen aus einzelnen Fasern 60' mit Enden 61. Bei der Weiterverarbeitung nach dem Nadeln werden die aus der Trägerschicht herausragenden Bereiche bis zu den Verdickungen 62 gekürzt, dann wird eine Farbschicht 57 und 58 auf die Kröpfungen der Unterseite der Trägerschicht aufgewalzt, die als Hitzeschutz bei der nachfolgenden thermischen Kürzung der Fasern 61 innerhalb der Hohlräume der Trägerschicht bis zu den Verdickungen 63 hin dient.

## Patentansprüche

1. Papiermaschinenfilz für den Transport und/oder die Entwässerung nasser Papierbahnen, bestehend aus einer durchlässigen, nach unten offene Hohlräume enthaltenden Trägerschicht und mindestens einer mittelbar oder unmittelbar auf die Oberfläche der Trägerschicht gelegten Vliesschicht aus feinen Fasern, die zum Teil in die Trägerschicht hineingestopft sind, dadurch gekennzeichnet, daß die freie Oberfläche der in die Hohlräume der Trägerschicht hineinragenden Fasern durch einen Umformprozeß verkleinert wurde.

2. Papiermaschinenfilz nach Anspruch 1, dadurch gekennzeichnet, daß die Verkleinerung der freien Oberfläche der in die Hohlräume der Trägerschicht hineingestopften Fasern so erfolgt, daß gleichzeitig sowohl der Loslösewiderstand der Vliesschicht von der Trägerschicht erhöht wird, als auch das Wasserabgabevermögen aus den Hohlräumen der Trägerschicht verbessert wird.

3. Papiermaschinenfilz nach Anspruch 1 und 2, dadurch gekennzeichnet, daß die Enden oder Endschlaufen der in die Hohlräume der Trägerschicht hineingestopften Fasern an die Wände der Trägerschicht festgeklebt sind.

4. Papiermaschinenfilz nach Anspruch 1 und 2, dadurch gekennzeichnet, daß die Enden oder Endschlaufen der in die Hohlräume der Trägerschicht hineingestopften Fasern in ihrer Länge geschrumpft und in ihren Endbereichen verdickt sind.

5. Papiermaschinenfilz nach den Ansprüchen 1 bis 4, dadurch gekennzeichnet, daß das Faservlies aus Fasern von einem mittleren Fadenquerschnitt von 0,00002 bis 0,0003 mm² besteht.

6. Papiermaschinenfilz nach den Ansprüchen 1 bis 5, gekennzeichnet durch eine flächenbezogene Masse der Vliesschicht von 200 bis 600 g/m².

7. Papiermaschinenfilz nach den Ansprüchen 1 bis 6, dadurch gekennzeichnet, daß mindestens Teilschichten der Vliesschicht vor dem Aufnadeln vorkompromiert worden sind.

8. Papiermaschinenfilz nach den Ansprüchen 1 bis 7, dadurch gekennzeichnet, daß zwischen Trägerschicht und Vliesschicht eine vorkompromierte Faserschicht eingelagert ist.

9. Papiermaschinenfilz nach den Ansprüchen 1 bis 6, dadurch gekennzeichnet, daß zwischen Trägerschicht und Vliesschicht eine Folie eingelagert ist.

10. Papiermaschinenfilz nach den Ansprüchen 1 bis 8, dadurch gekennzeichnet, daß die Trägerschicht aus einem oder mehreren Gewebebändern besteht.

11. Papiermaschinenfilz nach Anspruch 10, dadurch gekennzeichnet, daß die Gewebebänder so geschichtet sind, daß sie auf der Vliesseite engmaschiger als auf der Unterseite sind.

12. Papiermaschinenfilz nach den Ansprüchen 1 bis 9, dadurch gekennzeichnet, daß die Trägerschicht eine durchlöcherte Folie ist.

13. Papiermaschinenfilz nach einem der vorhergehenden Ansprüche, dadurch gekennzeichnet, daß die Trägerschicht in Laufrichtung und/oder quer zur Laufrichtung sich erstreckende Verstärkungsfäden enthält.

14. Papiermaschinenfilz nach den Ansprüchen 1 bis 13, gekennzeichnet durch eine flächenbezogene Masse der Trägerschicht von 500 bis 2000 g/m².

15. Verfahren zur Herstellung eines Papiermaschinenfilzes mit einer dünne Fasern enthaltenden papierseitigen Vliesschicht und mit einer darunterliegenden Durchbrüche und Hohlräume enthaltenden Trägerschicht, in die ein Teil der Vliesfasern hineingenadelt ist, dadurch gekennzeichnet, daß mindestens die Enden oder die Endschlaufen der hineingenadelten Fasern in einem folgenden Verfahrensschritt durch selektive Einwirkung von Seiten der Trägerschicht her in die Hohlräume hinein so umgeformt werden, daß ihre freie Oberfläche unter Verkürzung verkleinert wird.

16. Verfahren nach Anspruch 15, dadurch gekennzeichnet, daß die Einwirkung thermisch erfolgt.

17. Verfahren nach einem der Ansprüche 15 bis 16, dadurch gekennzeichnet, daß die Einwirkung chemisch erfolgt.

18. Verfahren nach einem der Ansprüche 15 bis 17, dadurch gekennzeichnet, daß die Verkleinerung der freien Oberfläche der Vliesfasern mindestens zum Teil durch Verklebung der Fasern untereinander und mit inneren Oberflächen der Trägerschicht in ungespanntem Zustand erfolgt.

19. Verfahren nach einem der Ansprüche 15 bis 18, dadurch gekennzeichnet, daß die Verkleinerung der Oberfläche der Faserenden und Endschlaufen durch Schrumpfung ihrer Länge erfolgt.

20. Verfahren nach einem der Ansprüche 15 bis 19, dadurch gekennzeichnet, daß die Fasern aus Polyamid bestehen und durch kurzzeitige Beaufschlagung der Enden mit Ameisensäure schrumpf- und klebfähig gemacht werden.

21. Verfahren nach einem der Ansprüche 15 bis 19, dadurch gekennzeichnet, daß die Schrumpfung und Verdickung der Faserenden durch kurzzeitige Erhitzung herbeigeführt wird.

22. Verfahren nach Anspruch 21, dadurch gekennzeichnet, daß die Erhitzung durch einen Heißluftstrom erfolgt.

23. Verfahren nach Anspruch 21, dadurch gekennzeichnet, daß die Erhitzung durch elektromagnetische Wellen erfolgt.

24. Verfahren nach Anspruch 23, dadurch gekennzeichnet, daß die Fasern oder deren Oberflächen so präpariert sind, daß sie bei der angebotenen hauptsächlichen Wellenlänge die Strahlung absorbieren.

25. Verfahren nach den Ansprüchen 21 bis 24, dadurch gekennzeichnet, daß die Trägerschicht bzw. deren Oberflächen so präpariert sind, daß sie einer schnellen Erwärmung widerstehen.

26. Verfahren nach den Ansprüchen 21 bis 25, dadurch gekennzeichnet, daß das Material der Trägerschicht eine höhere Temperaturbeständigkeit besitzt als die Vliesfasern.

27. Verfahren nach den Ansprüchen 15 und 16, dadurch gekennzeichnet, daß die Umformung der in die Hohlräume der Trägerschicht hineinragenden Vliesfasern in folgender Sequenz geschieht:
a) Abschneiden oder Absengen der aus der Unterseite der Trägerschicht herausragenden Vliesfasern;
b) Beschichtung der Unterseite der Trägerschicht mit Schutzfarbe;
c) thermische Einwirkung von unten in die Hohlräume der Trägerschicht hinein zur Umformung und Kürzung der dort befindlichen Vliesfasern.

28. Verfahren nach den Ansprüchen 21 bis 26, dadurch gekennzeichnet, daß die thermische Einwirkung in mehreren Richtungen erfolgt, deren Durchschnittsvektor annähernd 50 bis 70° zur Filzebene geneigt ist.

29. Verfahren nach Anspruch 16, dadurch gekennzeichnet, daß die thermische Behandlung auf einem Intensitätsniveau erfolgt, bei dem die in die Hohlräume der Trägerschicht hineinragenden Vliesfasern teilweise verbrannt oder verdampft werden.

30. Verfahren nach Anspruch 22, dadurch gekennzeichnet, daß im Bereich der Heißluftapplikation auf die Unterseite des Filzes, durch die Oberseite des Filzes Luft abgesaugt wird.

31. Papiermaschinenfilz nach Anspruch 11, dadurch gekennzeichnet, daß die Trägerschicht ein drei- oder vierlagiges Gewebe ist, dessen oberste Lage von Schußfäden aus gesponnenem Garn besteht, während alle anderen Fäden monofil oder aus 2 bis 8 Monofilfäden zusammengezwirnte Stränge sind.

32. Papiermaschinenfilz nach den Ansprüchen 1 und 2, dadurch gekennzeichnet, daß die Vliesschicht an der papierseitigen Oberfläche ein Flor aus gröberen Fasern als die darunterliegenden Vliesfasern besitzt mit einer flächenbezogenen Masse von 20 bis 100 g/m².
